(19) Europäisches Patentamt

European Patent Office

Office européen des brevets

(11) Publication number: **0 311 353 B1**

(12) **EUROPEAN PATENT SPECIFICATION**

(45) Date of publication of patent specification: **04.08.93**  (51) Int. Cl.5: **G01N 27/417**, F02D 41/14

(21) Application number: **88309236.3**

(22) Date of filing: **04.10.88**

(54) **An air-fuel ratio sensor for an internal combustion engine.**

(30) Priority: **05.10.87 JP 249827/87**

(43) Date of publication of application:
**12.04.89 Bulletin  89/15**

(45) Publication of the grant of the patent:
**04.08.93 Bulletin  93/31**

(84) Designated Contracting States:
**DE GB**

(56) References cited:
**EP-A- 0 136 519**
**EP-A- 0 187 649**
**WO-A-89/01623**
**JP-A-60 164 240**
**US-A- 4 359 374**

**PATENT ABSTRACTS OF JAPAN, vol. 9, no.
133 (P-362)[1856], 8th June 1985;& JP-A-60 17
348**

**PATENT ABSTRACTS OF JAPAN, vol. 8, no.
48 (P-258)[1485], 3rd March 1984;& JP-A-58
200 158**

**PATENT ABSTRACTS OF JAPAN, vol. 7, no.
176 (P-214)[1321], 4th August 1983;& JP-A-58
79 148**

(73) Proprietor: **HITACHI, LTD.**
**6, Kanda Surugadai 4-chome**
**Chiyoda-ku, Tokyo 100(JP)**

(72) Inventor: **Ohyama, Yoshishige**
**24-18 Higashiooshima 3-chome**
**Katsuta-shi Ibaraki 312(JP)**
Inventor: **Ohsuga, Minoru**
**2592-1-533 Aza Bouda Takaba**
**Katsuta-shi Ibaraki 312(JP)**

(74) Representative: **Molyneaux, Martyn William et
al**
**c/o Ladas & Parry, Altheimer Eck 2**
**W-8000 München 2 (DE)**

**Description**

BACKGROUND OF THE INVENTION

Field of the invention

The present invention relates to an air-fuel ratio sensor for an internal combustion engine, which is capable of detecting an air-fuel ratio of fuel mixture supplied to the engine both in the rich region and the lean region as well as the stoichiometric air-fuel ratio, and more particularly to an improvement of an air-fuel ratio sensor of the type that a signal representative of the air-fuel ratio is obtained by simply amplifying a voltage produced by a sensing portion of the sensor in response to an air-fuel ratio of fuel mixture.

Description of the related art

There has been known an air-fuel ratio sensor of the type that an air-fuel ratio of fuel mixture supplied to an internal combustion engine is detected directly from a voltage produced by a sensing portion made of solid electrolyte, oxide semiconductor and so on in response to the concentration of remaining oxygen included in exhaust gas from the engine over the wide range from the rich region to the lean one, including the stoichiometric air-fuel ratio (Japanese patent laid-open publication JP-A-62/67255 published March 26, 1987); see also EP-A-0187649.

According to the prior art as described above, there are provided means for detecting both a voltage induced by a sensing portion and an internal resistance thereof. The temperature dependence of the output voltage, which is accompanied by the sensing portion, is compensated by using the detected internal resistance thereof.

From EP-A-0136519 an air-fuel ratio control apparatus is disclosed which corrects a desired air-fuel ratio by utilising output from a temperature sensor provided for detecting a temperature of an exhaust gas. The air-fuel ratio control in this reference however is effected in order to protect a catalyst for exhaust gas purification. The temperature detection of exhaust gas in this reference is not effected for temperature compensation for detecting air-fuel ratio mixture as required by the subject invention.

It is known from EP-A-0187649 to control a mixture for an internal combustion with a temperature compensation lambda probe of the type described in the precharacterising clause of the subject application claim 1.

In the prior art sensor, however, there are problems in view of the accuracy and reliability of the measurement. Especially, the measurement accuracy of the sensor becomes worse in the lean and rich regions of an air-fuel ratio of fuel mixture, because the changing rate of a voltage induced by the sensing portion with respect to an air-fuel ratio is very small in those regions.

SUMMARY OF THE INVENTION

An object of the present invention is to provide an air-fuel ratio sensor for an internal combustion engine, which can detect an air-fuel ratio of fuel mixture supplied to the engine by simply amplifying a voltage produced by a sensing portion of the sensor in response to the concentration of remaining oxygen included in exhaust gas from the engine, with high accuracy and high reliability both in the rich region of the fuel mixture and the lean region thereof.

According to one aspect of this invention there is provided an air-fuel sensor for sensing an air-fuel ratio of air-fuel mixture supplied to an internal combustion engine, comprising a sensing portion exposed to exhaust gas from the engine, for producing an output voltage in response to the concentration of remaining oxygen included in the exhaust gas, said sensing portion having an output characteristic with a portion that changes stepwise in the vicinity of the stoichiometric air-fuel ratio of a mixture and a portion that changes linearly with respect to an air-fuel ratio of a mixture on either side of the stoichiometric air-fuel ratio; and means for detecting a temperature of said sensing portion and for producing a signal representative of an actual air-fuel ratio of the mixture, which is compensated in accordance with the temperature of said sensing portion, characterised in that said means for detecting and producing is a microprocessor which further includes a table of reference voltages versus temperature of said sensing portion, said microprocessor including means for determining a reference voltage by retrieving the table on the basis of the detected temperature of said sensing portion; the sensor further comprising amplifying means for obtaining a voltage deviation between the output voltage of said sensing portion and the reference voltage determined by the means for determining a reference voltage, and means for identifying the actual air-fuel ratio on the basis of the voltage deviation provided by the means for obtaining.

According to another aspect of this invention there is provided a method of sensing an air-fuel ratio of air-fuel mixture supplied to an internal combustion engine including the steps of producing an output voltage by a sensing portion in response to the concentration of remaining oxygen included in the exhaust gas, said sensing portion having an output characteristic with a portion that changes stepwise in the vicinity of the stoichiometric air-fuel ratio of a mixture and a portion that changes linearly with respect to an air-fuel ratio of a mixture on either side of the stoichiometric air-fuel ratio, and detecting a temperature of said sensing portion for producing a signal representative of actual air-fuel ratio of the mixture, which is compensated in accordance with the temperature of said sensing portion, characterised by the steps of providing a table of reference voltages versus temperature of said sensing portion, determining a reference voltage by retrieving the table on the basis of the detected temperature of said sensing portion, an amplifying means obtaining a voltage deviation between the output voltage of said sensing portion and the reference voltage determined by the determining step, and identifying the actual air-fuel ratio on the basis of the voltage deviation provided by the obtaining step.

In the present invention, since a deviation between the output voltage of a sensing portion of an air-fuel ratio sensor and a reference voltage provided for comparison therewith is compressed, a sufficiently large amplification factor can be used in order to amplify the aforesaid deviation, in which an air-fuel ratio is determined on the basis of the amplified deviation. As a result, the changing range of the output voltage of the sensor with respect to the air-fuel ratio both in the rich and lean regions can be made wide and, therefore, the measurement accuracy of the sensor can be improved.

Further, since the reference voltage provided for comparison is selected at values respectively suited for the rich region and for the lean region in accordance with an air-fuel ratio, which is set in advance for an air-fuel ratio control of an internal combustion engine, the measurement accuracy is improved in both regions, rich or lean, of the air-fuel ratio.

Moreover, if the reference voltage can be varied in accordance with the temperature of a sensing portion of an air-fuel ratio sensor, the influence of the temperature dependence of the output characteristics of the sensing portion on the measurement accuracy can be eliminated. In addition, the influence of combustible components included in exhaust gas can be also removed, if the temperature of a sensing portion of an air-fuel ratio sensor is controlled to be maintained at a value higher than a predetermined temperature.

BRIEF DESCRIPTION OF THE DRAWINGS

Fig. 1 schematically shows the overall configuration of an air-fuel ratio sensor according to an embodiment of the present invention;

Fig. 2 is a graph for explaining the influence of the temperature of a sensing portion of an air-fuel ratio sensor on the output characteristics of the sensing portion with respect to air-fuel ratio represented in terms of air excess ratio;

Fig. 3 is a graph for explaining the influence of various combustible components included in exhaust gas on the output characteristics of a sensing portion with respect to air-fuel ratio represented in terms of air excess ratio;

Fig. 4 is a flow chart illustrating the processing operation of a microprocessor of the air-fuel ratio sensor shown in Fig. 1;

Fig. 5 is a graph showing the output characteristics of the sensor according to the embodiment of Fig. 1 with respect to air-fuel ratio represented in terms of air excess ratio;

Fig. 6 is a flow chart illustrating a part of the operation of the microprocessor in one of typical applications of the present invention;

Figs. 7a to 7c are graphs showing examples of the temperature dependence of change in the resistivity of oxide semiconductors, which can be employed as material for a sensing portion of an air-fuel ratio sensor of the present invention; and

Fig. 8 schematically shows the overall configuration of an air-fuel ratio sensor according to another embodiment of the present invention.

DESCRIPTION OF THE PREFERRED EMBODIMENTS

In the following, the explanation will be made of embodiments of the present invention with reference to the accompanying drawings.

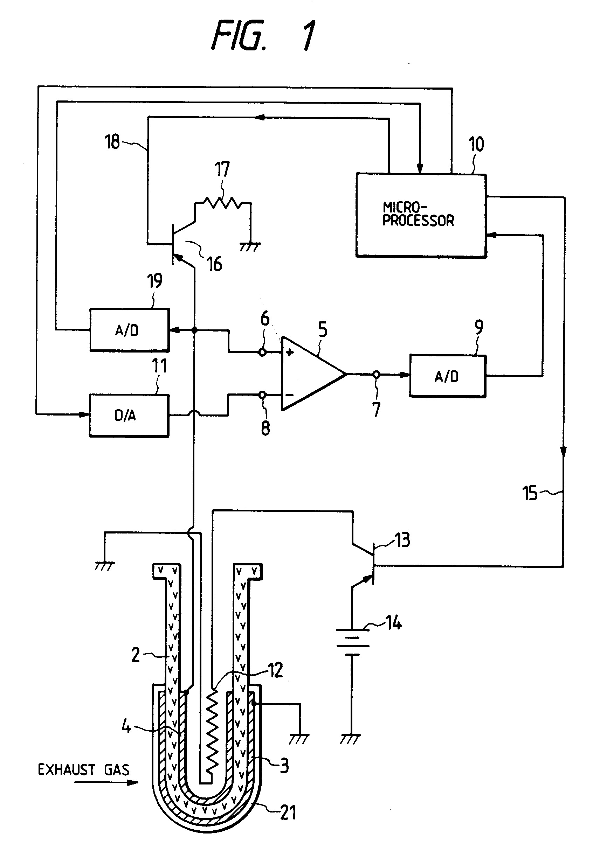

In Fig. 1 there is shown the overall configuration of an air-fuel ratio sensor according to an embodiment of the present invention, in which solid electrolyte such as $Z_rO_2$, $Y_2O_3$ is employed as material of a sensing portion of the sensor. As shown in the figure, in a passage (not shown), through which exhaust gas from an internal combustion engine flows, there is provided solid electrolyte part 2, which is formed in the cylindrical form, one end of which is closed. Therefore, the outer side of the cylindrical part 2 is exposed to the exhaust gas, and air is introduced as a reference gas into the inside of the cylindrical part 2.

On respective sides of the cylindrical electrolyte part 2, there are provided electrodes, i.e., electrode 3 on the outer side of the electrolyte part 2 and electrode 4 on the inner side thereof. The electrode 3 is brought into contact with the exhaust gas, which reaches thereat through protection layer 21, and the electrode 4 is in the atmosphere of air as the reference gas. The electrode 3 is grounded and the electrode 4 is coupled to a signal processing circuit described later. The solid electrolyte part 2, the two electrodes 3, 4 and the protection layer 21 constructs a sensing portion of the sensor.

There is provided heater 12 within the inside of the cylindrical electrolyte part 2. One end of the heater 12 is grounded and the other end thereof is coupled to a collector of transistor 13. An emitter of the transistor 13 is coupled to one end of DC power source 14, the other end of which is grounded. The transistor 13 is controlled by a signal given to its base through line 15, whereby the temperature of the sensing portion is maintained constant at a predetermined value so as to make the sensor operate in the desirable condition.

The electrode 4 is coupled to positive input terminal 6 of differential amplifier 5, whereby an output voltage of the sensing portion, which is induced across the electrodes 3 and 4 in response to the difference of the oxygen concentration between the exhaust gas and the reference gas (air), is given to the amplifier 5. A reference voltage for comparison with the output voltage is applied to negative input terminal 8 of the amplifier 5 through digital to analog (D/A) converter 11.

As a result, the amplifier 5 produces a deviation signal in proportion to the deviation between the output voltage of the sensing portion and the reference voltage at its output terminal 7. The deviation signal is coupled to microprocessor 10 through analog to digital (A/D) converter 9.

The terminal 6 of the amplifier 5 is also coupled to an emitter of transistor 16, a collector of which is grounded through resistor 17. The transistor 16 is controlled by a signal given to its basis from the microprocessor 10 through line 18. Further, analog to digital (A/D) converter 19 is coupled to the terminal 6, and the output of the converter 19 is given to the microprocessor 10.

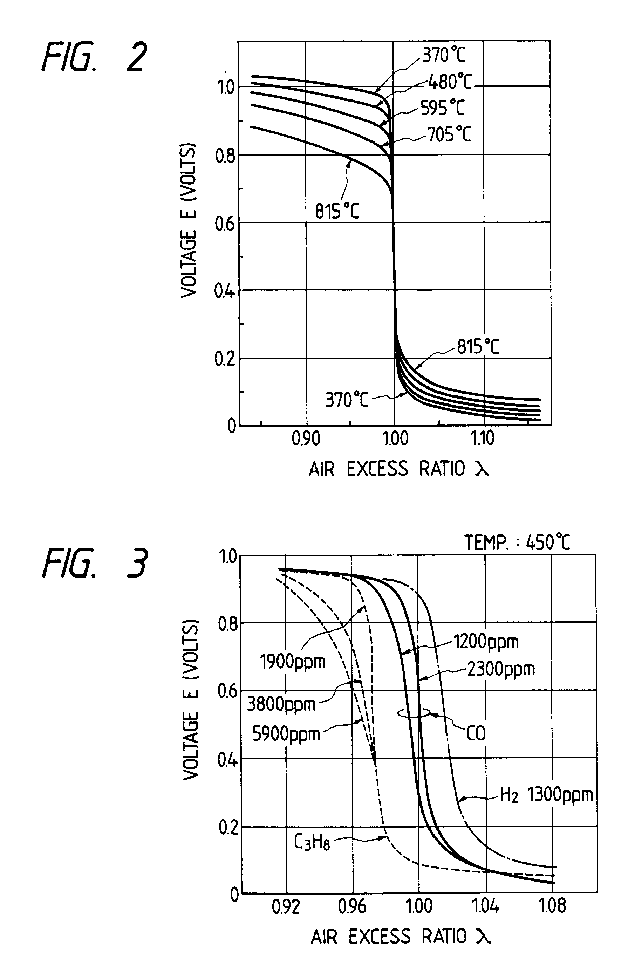

In the air-fuel ratio sensor as described above, it is well known that the characteristics of the output voltage induced across the electrodes 3 and 4 with respect to air-fuel ratio represented in terms of air excess ratio is as shown in Fig. 2. Incidentally, in the following description, an air-fuel ratio will be represented by an air excess ratio $\lambda$, which is defined as a ratio of an air-fuel ratio to the stoichiometric value (14.7). Therefore, the stoichiometric air-fuel ratio is represented by $\lambda = 1.0$. In the rich region, in which an air-fuel ratio is smaller than 14.7, $\lambda$ becomes smaller than 1.0, whereas, in the lean region, in which an air-fuel ratio is larger than 14.7, it becomes larger than 1.0.

As shown in the figure, the output voltage greatly changes stepwise at the stoichiometric air-fuel ratio ($\lambda = 1.0$). The output voltage changes very gently in the regions on both sides of the stoichiometric air-fuel ratio, i.e., in the rich region ($\lambda < 1.0$) and in the lean region ($\lambda > 1.0$). In addition, the output voltage in those regions widely varies in accordance with the temperature of the sensing portion.

When a sensing portion has the output characteristics as mentioned above, it is not practical to detect an air-fuel ratio over the wide range by simply amplifying the output voltage of the sensing portion, because the output voltage of the sensing portion widely varies. Usually, a reference voltage of a predetermined value, e.g., 0.5 volts, is set, and a difference between the output voltage of the sensing portion and the reference voltage is obtained. The high accuracy detection of an air-fuel ratio is intended by amplifying the difference with a sufficiently large amplification factor. With such a single, fixed reference voltage, however, the sufficiently large amplification factor can not be used, because the difference between the output voltage and the reference voltage varies very widely in response to the temperature of the sensing portion.

Incidentally, the output characteristics also varies in accordance with various combustible components usually included more or less in the exhaust gas, as shown in Fig. 3. This makes the measurement accuracy worse, too. However, the influence of the combustible components can be removed by adjusting the temperature of the sensing portion to be maintained at a temperature higher than a predetermined value, desirably, above 600 C.

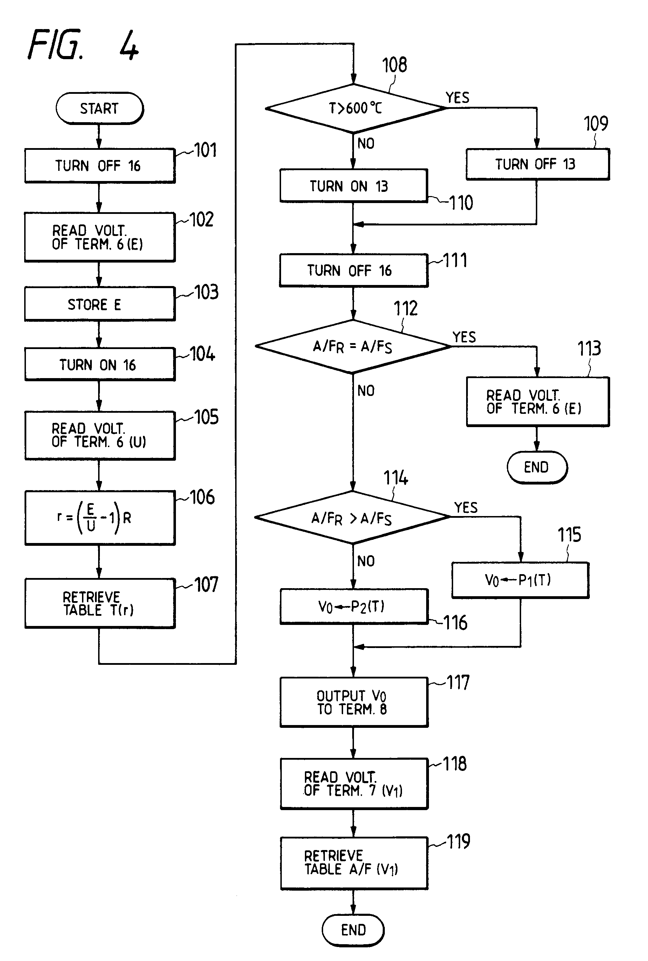

In the following, the operation of the air-fuel ratio sensor shown in Fig. 1 will be explained, referring to Fig. 4, which is a flow chart illustrating the processing operation executed by the microprocessor 10 for the purpose of detection of an air-fuel ratio.

In the processing operation of this flow chart, the portion of steps 101 to 107 serves the detection of the temperature of the sensing portion according to the following principle. Assuming that the voltage at the terminal 6 upon turning-on of the transistor 16 is represented by U, the voltage thereat upon turning-off of the transistor 16 by E, a resistance of the resistor 17 by R, and an internal resistance of the electrolyte part 2 by r, there exists the following relation thereamong:

$$U = \frac{R}{R + r} E \qquad\qquad (1)$$

The above formula (1) is rewritten as:

$$r = (\frac{E}{U} - 1)R \qquad (2)$$

Now, the explanation will be given to the processing operation illustrated by the flow chart of Fig. 4. This operation is repeatedly executed by the microprocessor 10 at intervals of 80 msec., for example. After start of the operation, an instruction is issued to the transistor 16 at step 101, whereby it is turned off. As a result, the resistor 17 is separated from the electrolyte part 2, and therefore, the voltage E appearing at the terminal 6 at that time means an electromotive force induced by the sensing portion in response to the oxygen concentration difference between the exhaust gas and the reference gas.

This voltage E is read into the microprocessor 10 at step 102 and stored in an appropriate storage therein at step 103. Then, the transistor 16 is turned on at step 104, whereby the resistor 17 is connected in series with the electrolyte part 2 and therefore the voltage appearing at the terminal 6 at that time becomes equal to the voltage U represented by the above formula (1). This voltage U is also read into the microprocessor 10 at step 105. Then, at step 106, the internal resistance r of the electrolyte part 2 is calculated on the basis of the voltages E and U in accordance with the formula (2).

As is well known, the internal resistance r of the electrolyte part 2 has the exponential relation to the temperature thereof. This relation is stored in advance in the storage of the microprocessor 10 in the form of a table T(r) of temperature T versus internal resistance r. Then, at step 107, the temperature T of the electrolyte part 2 is determined by retrieving the table with the internal resistance r obtained at step 106.

After the determination of the temperature T of the sensing portion, the processing operation goes to step 108, at which it is discriminated whether or not the detected temperature T is higher than 600°C. This reference temperature 600°C is selected to avoid the influence of the combustible components included in the exhaust gas, which has been already described. In fact, it is known that if the temperature of the sensing portion is maintained above 600°C, the influential combustible components disappear in the exhaust gas or, at least, the influence thereof on the output characteristics of the sensing portion is reduced down as small as negligible.

If the temperature T of the sensing portion is judged to be lower than 600°C, the transistor 13 is turned on at step 110 to flow a current through the heater 12. Otherwise, the transistor 13 is turned off at step 109 to cut off the current flowing through the heater 12. After execution of either step 110 or 109, the operation goes to step 111.

As already mentioned, the operation of this flow chart is repeated at intervals of 80 msec.. Therefore, step 108 and step 109 or 110 are also repeated at the same interval. This means that the current flowing through the heater 12 is intermittently controlled to maintain the temperature of the sensing portion at 600°C. Namely, these steps are provided for the purpose of the temperature control of the sensing portion. If that purpose can be performed by any other measures, those steps are not necessary to be provided in the processing operation of this flow chart.

Next, at step 111, the transistor 16 is turned off again, and it is discriminated at step 112 whether or not an air-fuel ratio $A/F_R$, which is set in advance as a reference for the air-fuel ratio control of an internal combustion engine, is equal to the stoichiometric air-fuel ratio $A/F_S$. If both are equal to each other, the voltage appearing at the terminal 6 at that time is read as voltage E into the microprocessor 10 at step 113 and the processing operation ends. This voltage E is used for the air-fuel ratio control.

If the set air-fuel ratio reference $A/F_R$ differs from the stoichiometric air-fuel ratio $A/F_S$, it is further discriminated at step 114 whether or not the former is larger than the latter. When the reference $A/F_R$ is larger than the stoichiometric value $A/F_S$, i.e. in the case where the engine is instructed to operate with lean fuel mixture, a first voltage $P_1(T)$ is set at step 115 as the reference voltage $V_0$ for comparison with the output voltage of the sensing portion. On the contrary, if the reference $A/F_R$ is smaller than the stoichiometric value $A/F_S$, i.e. in the case where the engine is to operate with rich fuel mixture, a second voltage $P_2(T)$ is selected at step 116 as the reference voltage $V_0$.

As will be understood from the graph of Fig. 2, it is desirable for the purpose of avoiding the influence of the temperature on the measurement accuracy that the voltage $P_1(T)$ or $P_2(T)$ is altered in response to the temperature $T$ of the sensing portion, which was detected at step 107. Therefore, the microprocessor 10 has the relation of the first reference voltage $P_1(T)$ and the second reference voltage $P_2(T)$ with respect to temperature $T$ in the form of a table stored in the storage thereof. At steps 115 and 116, $P_1(T)$ or $P_2(T)$ is determined as the reference voltage $V_0$ by retrieving the table with the temperature detected at step 107.

The thus determined reference voltage $V_0$ is output to the input terminal 8 of the amplifier 5 through the D/A converter 11 at step 117. On the other hand, the output voltage $E$ of the sensing portion is applied to the input terminal 6 thereof, since the transistor 16 is turned off at step 111. Therefore, the differential amplifier 5 outputs the voltage in proportion to a deviation between the output voltage $E$ and the reference voltage $V_0$. At step 118, the voltage $V_1$ appearing at the output terminal 7 of the amplifier 5 in proportion to the deviation is read into the microprocessor 10.

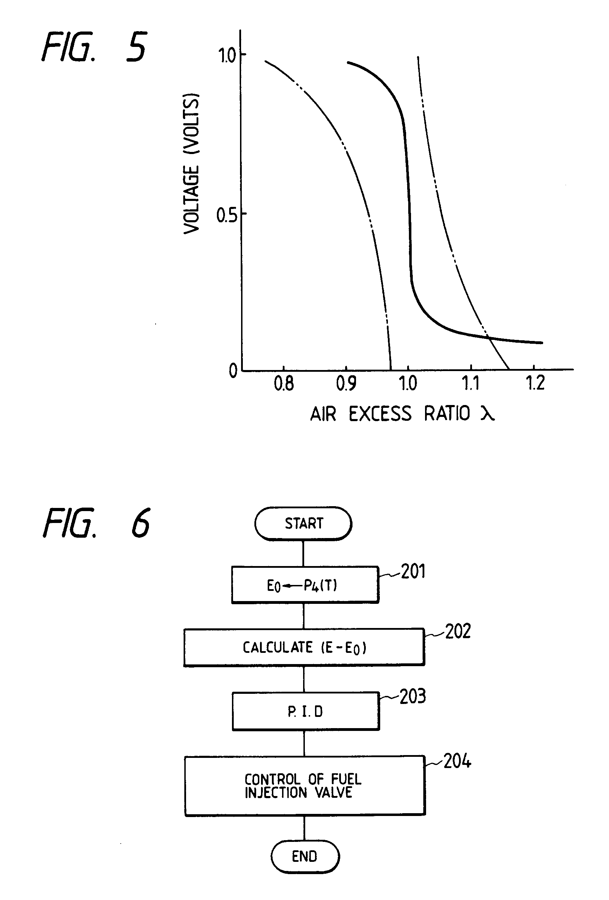

At step 119, a table stored in the storage of the microprocessor 10 is retrieved with the voltage $V_1$, whereby the air-fuel ratio is determined. The table has the relation of the air-fuel ratio with respect to voltage $V_1$, as shown in Fig. 5. After that, the processing operation ends.

In this manner, according to the present invention, there is provided the reference voltage for comparison with the output voltage of the sensing portion, which has the different value in accordance with whether the air-fuel ratio reference set in advance for the air-fuel ratio control is in the rich region or in the lean region. In the following, the advantage of providing such reference voltage will be discussed, referring again to Fig. 2.

In the rich region, at first, when the temperature of the sensing portion is 815°C, the sensing portion produces the output voltage of about 0.7 volts in the vicinity of $\lambda = 1.0$ and that of about 0.9 volts at $\lambda = 0.85$. If the voltage in the vicinity of $\lambda = 1.0$ is taken as the reference voltage $V_0$, the maximum deviation therefrom through this range of $\lambda$ is about 0.2 volts. Similarly, when the temperature of the sensing portion is 370°C, the maximum deviation is about 0.1 volts through the same range of $\lambda$, assuming that the output voltage in the vicinity of $\lambda = 1.0$, i.e., about 0.95 volts, is taken as the reference voltage $V_0$.

Next, in the lean region, when the temperature of the sensing portion is 815°C, the sensing portion produces the output voltage of about 0.25 volts in the vicinity of $\lambda = 1.0$ and that of about 0.1 volts at $\lambda = 1.15$. Therefore, the maximum deviation of the output voltages through this range of $\lambda$ is about 0.15 volts. Similarly, when the temperature of the sensing portion is 370°C, it becomes smaller than 0.15 volts by taking the output voltage in the vicinity of $\lambda = 1.0$, i.e., about 0.2 volts, as the reference voltage.

Therefore, if the reference voltage is selected in accordance with the region of the set air-fuel ratio reference, i.e., rich or lean, the deviation between the output voltage of the sensing portion and the reference voltage can be resultantly reduced within 0.2 volts both in the rich region and the lean region. Accordingly, the deviation thereof can be amplified by a single, sufficiently large amplification factor, with the result that the changing range of the output voltage of the sensing portion with respect to air-fuel ratio can be expanded and the messurement accuracy is much improve. Further, if the reference voltage is altered in accordance with the temperature of the sensing portion, the temperature dependence of the output characteristics of the sensing portion can be eliminated.

An example of the output voltage $V_1$ of the amplifier 5 with respect to the air excess ratio is shown in Fig. 5. As apparent from the figure, the changing range of the output voltage with respect to air excess ratio becomes very large, compared with that in the case of Fig. 2. Therefore, the air-fuel ratio can be detected with the very high accuracy.

If a control apparatus for an internal combustion engine is designed to control the air-fuel ratio of fuel mixture supplied to the engine by a closed control loop, the value itself of the air-fuel ratio is not necessary to be identified. Namely, the air-fuel ratio can be controlled by obtaining a reference thereof from the output of an air-fuel ratio sensor. Fig. 6 shows a flow chart of a part of the processing operation of the microprocessor 10, which is to be added in such an application of the present invention.

In such a case, at first, steps 101 to 111 in the flow chart of Fig. 4 are executed to obtain the temperature $T$ of a sensing portion. Thereafter, a reference voltage $E_0$ is determined at step 201 of this flow chart. The microprocessor 10 has a table of voltage $P_4(T)$ versus temperature $T$, and at step 201 the table is retrieved with the detected temperature $T$ to determine the reference voltage $E_0$.

Then, at step 202, the output voltage $E$ of the sensing portion is compared with the reference voltage $E_0$, and the deviation therebetween is obtained. The deviation $(E-E_0)$ is subjected to the processing for the proportional integral and differential (P-I-D) operation at step 203. Then, at step 204, a fuel injection valve is controlled on the basis of the result of the processing of step 203. After completion of step 204, the processing operation returns to step 101 of the flow chart of Fig. 4.

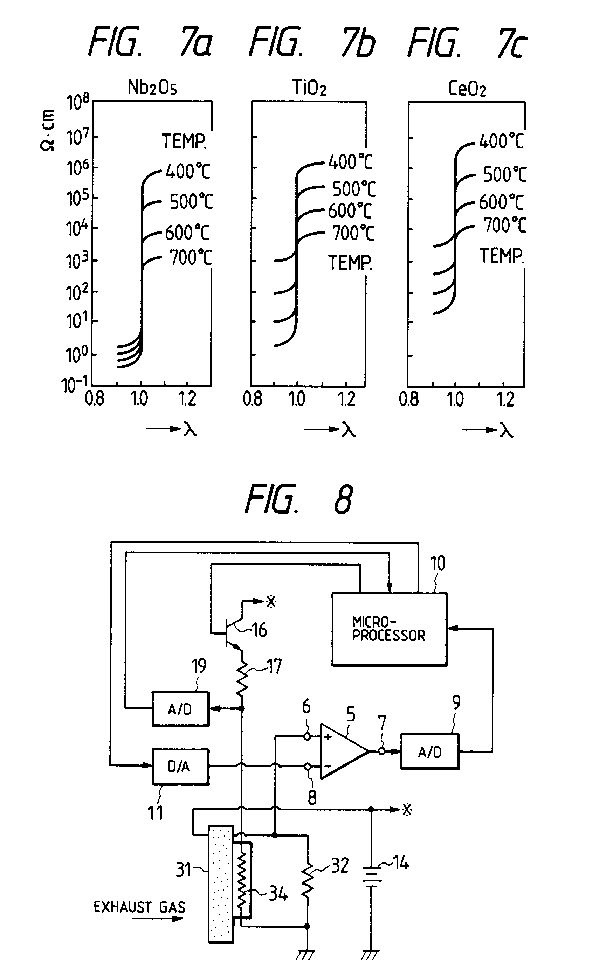

As already described, oxide semiconductor can be employed as material of a sensing portion. In this case, there is used the characteristics that the resistivity of the oxide semiconductor changes in response to the concentration of remaining oxygen included in exhaust gas from an internal combustion engine, i.e., the air-fuel ratio of fuel mixture supplied to the engine. In Figs. 7a to 7c, there are shown examples of the resistivity characteristics of $Nb_2O_5$, $TiO_2$, and $CeO_2$ with respect to air-fuel ratio represented in terms of air excess ratio.

As apparent from those figures, the resistivity characteristics widely changes sharply at the stoichiometric air-fuel ratio and has the temperature dependence, quite similarly to that of solid electrolyte as already mentioned. Accordingly, the present invention can be applicable to an air-fuel ratio sensor using such oxide semiconductor as material of a sensing portion. In the following, the explanation will be made of another embodiment of the present invention, in which oxide semiconductor is used.

Fig. 8 schematically shows the overall configuration of an air-fuel ratio sensor using oxide semiconductor In the figure, the same reference numerals represent the same parts as in Fig. 1.

As shown in Fig. 8, oxide semiconductor part 31 functioning as a sensing portion is positioned at such a location that it can be in contact with the exhaust gas. A first electrode (not shown) provided on one side of the sensing portion is coupled to one of the DC power source 14. A second electrode (not shown) provided on the other side of the sensing portion is grounded through resistor 32. The resistor 32 functions to convert the change in the resistivity of the sensing portion in response to the concentration of the remaining oxygen into a voltage. This voltage corresponds to the output voltage of the sensing portion in Fig. 1. The second electrode is also coupled to the positive input terminal 6 of the differential amplifier 5, whereby the voltage appearing across the resistor 32 is applied to the amplifier 5 as one of two input signals.

Heater 34 made of platinum is provided neighbouring on or in contact with the sensing portion. Further, although it is of course that appropriate protecting measures are provided, they are omitted here in the figure. One end of the heater 34 is grounded and the other end thereof is coupled to the resistor 17. The resistor 17 is in turn coupled to the DC power source 14 through the transistor 16, which is controlled by a signal from the microprocessor 10. The other end of the heater 34 is also coupled to the microprocessor 10 through the A/D converter 19.

The negative input terminal 8 of the amplifier 5 is supplied with a reference voltage from the microprocessor 10 through the D/A converter 11, and an output voltage of the amplifier 5 appearing at the output terminal 7 is given to the microprocessor 10 through the A/D converter 9.

Assuming that a resistance of the platinum heater 34 is represented by $R_H$, that of the resistor 17 by R, and the voltage of the DC power source 14 by $V_d$, the voltage v appearing at a connecting point of the resistor 17 and the heater 34 is represented by the following formula:

$$v = \frac{R}{R_H + R} V_d \qquad\qquad (3)$$

The above formula is rewritten as:

$$R_H = \left(\frac{V_d}{v} - 1\right)R \qquad (4)$$

As apparent from the formula (4), the resistance $R_H$ of the platinum heater 34 can be obtained from the voltage v. This means that the temperature T of the platinum heater 34, and hence the temperature of the sensing portion, can be obtained, because there is a known relation between the resistance $R_H$ and the temperature T of the platinum heater 34. With the thus determined temperature T of the sensing portion, the voltage $V_0$ to be applied to the terminal 8 of the amplifier 5 can be determined in the microprocessor 10. Therefore, the temperature of the sensing portion of this embodiment can be obtained in an analogous manner to the pertinent portion of the processing operation of the flow chart of Fig. 4.

Namely, after start of the processing operation, the transistor 16 is at once turned on, and then the voltage appearing at the connecting point of the resistor 17 and the heater 34 is read into the microprocessor 10 through the A/D converter 19. In the microprocessor 10, the resistance $R_H$ is calculated on the basis of the voltages v and $V_d$ in accordance with the formula (4), and a predetermined table of temperature T versus resistance $R_H$ is retrieved with the calculated resistance $R_H$, whereby the temperature T is obtained.

The processing operation after that in this embodiment is the same as the corresponding portion, i.e., step 108 et seqq., in the processing operation of the flow chart of Fig. 4.

In the following, there will be discussed the reliability of an air-fuel ratio sensor according to the present invention.

Usually, there are included combustible components such as $H_2$, CO, HC in exhaust gas, even if the air excess ratio of fuel mixture is larger than 1.0. Among those components, $H_2$ diffuses through the protection layer 21 with high velocity, compared with $O_2$. Further, $O_2$ has the diffusion velocity higher than HC. For this reason, there occurs the difference in the partial pressure of $O_2$ between the surface of the solid electrolyte part 2 and the outer surface of the protection layer 21. To eliminate this difference of the partial pressure, the exhaust gas is maintained at the temperature higher than 600°C to reduce the combustible components included therein to substantially zero. As a result, even if the porous protection layer 21 is somewhat blinded by $SiO_2$, soot, etc., the influence of the blinding can be avoided, whereby the reliability of the sensor is greatly raised.

When the air excess ratio is smaller than 1.0, components $CO_2$, $H_2O$ and components $H_2$, $O_2$, CO are in the equilibrium with each other. In this case, since $O_2$ and CO have the diffusion velocity almost equal to each other, there occurs no inconvenient influence on the output voltage of the sensing portion, even if the protection layer 21 is blinded to a certain extent.

However, $H_2$ diffuses at the velocity three times as high as that of $O_2$. If, therefore, there is the difference in the gas temperature between the outer surface of the protection layer 21 and the surface of the electrolyte part 2, the equilibrium conditions of $H_2$ and $O_2$ become different from each other, and the aforesaid difference in the diffusion velocity influences the output voltage of the sensing portion. To avoid this, the gas temperature on the outer surface of the protection layer 21 is necessary to be made as close to that on the surface of the electrolyte part 2 as possible.

For this purpose, it is sufficient to make the temperature boundary on the surface of the protection layer 21 thick. Although the protection layer 21 is usually made of $Al_2O_3$ or magnesium spinel of 50 to 100 $\mu$m thickness, it is effective for that purpose to provide ceramic particles with considerably large grain size or fibrous material on the surface of the protection layer 21. Further, a tube can be further provided so as to surround the protection layer 21, whereby the velocity of gas in the vicinity of the surface of the protection layer 21 is reduced to make the temperature boundary large.

If the temperature of gas on the surface of the solid electrolyte part 2 or the oxide semiconductor 31 is maintained above 600°C and further the temperature of gas on the outer surface of the protection layer 21 is made equal to that temperature, the concentration of oxygen determined by the equilibrium of the water gas reaction can be measured exactly. In this case, the concentration of oxygen does not suffer any influence of components $H_2$, CO, etc., because it is defined only by the relation with the air excess ration and the temperature.

As described above, according to the present invention, the changing range of the output voltage of an air-fuel ratio sensor with respect to air-fuel ratio can be made remarkably wide both in the rich region and the lean region, which makes it possible to measure the air-fuel ratio with high accuracy. With such an air-fuel ratio sensor, the performance of an internal combustion engine can be improved without requiring the very large cost.

Further, since the influence of combustible components such as $H_2$, CO, HC, etc. included in exhaust gas on the measurement of the air-fuel ratio can be avoided, an air-fuel ratio sensor does not suffer the aged deterioration, even if the surface of a sensing portion of the sensor is blinded by $SiO_2$, soot, etc.. As a result, the reliability of the sensor can be much improved.

**Claims**

1. An air-fuel sensor for sensing an air-fuel ratio of air-fuel mixture supplied to an internal combustion engine, comprising a sensing portion (2-4, 21) exposed to exhaust gas from the engine, for producing an output voltage in response to the concentration of remaining oxygen included in the exhaust gas, said sensing portion having an output characteristic with a portion that changes stepwise in the vicinity of the stoichiometric air-fuel ratio of a mixture and a portion that changes linearly with respect to an air-fuel ratio of a mixture on either side of the stoichiometric air-fuel ratio; and means (10) for detecting a temperature of said sensing portion and for producing a signal representative of an actual air-fuel ratio of the mixture, which is compensated in accordance with the temperature of said sensing portion, characterized in that said means for detecting and producing is a microprocessor (10) which further includes a table of reference voltages versus temperature of said sensing portion, said microprocessor including means for determining a reference voltage ($V_o$) by retrieving the table on the basis of the detected temperature (T) of said sensing portion; the sensor further comprising amplifying means (5) for obtaining a voltage deviation ($V_1$) between the output voltage (E) of said sensing portion and the reference voltage ($V_o$) determined by the means for determining a reference voltage, and means (10) for identifying the actual air-fuel ratio on the basis of the voltage deviation provided by the means for obtaining.

2. An air-fuel ratio sensor according to claim 1, wherein said sensing portion has a solid electrolyte part (2) and two electrodes (3, 4) provided on respective sides of the solid electrolyte part, one of the electrodes (3) being exposed to the exhaust gas and the other (4) to a reference gas, whereby the output voltage of said sensing portion is obtained in a form of a voltage appearing across the electrodes in response to the concentration of remaining oxygen included in the exhaust gas.

3. An air-fuel ratio sensor according to claim 2, wherein the detecting means comprises means for detecting an internal resistance of the solid electrolyte part; and means for identifying the temperature of said sensing portion on the basis of the detected internal resistance.

4. An air-fuel ratio sensor according to claim 1, wherein said sensing portion is composed of an oxide semiconductor part (2), which changes resistivity thereof in response to the concentration of remaining oxygen included in the exhaust gas, and means for converting the change of resistivity into a voltage as the output voltage of said sensing portion.

5. An air-fuel ratio sensor according to claim 4, further including means (12) for heating the oxide semiconductor part (2) to maintain the temperature thereof at a predetermined value, and the detecting means comprises means for detecting a resistance of the heating means (12); and means for identifying the temperature of said sensing portion on the basis of the detected resistance.

6. An air-fuel ratio sensor according to claim 1, wherein the determining, obtaining and identifying means are actuated when the temperature detected by the detecting means exceeds a predetermined value.

7. An air-fuel ratio sensor according to claim 1, wherein the determining means comprises means for discriminating which is larger between the stoichiometric air-fuel ratio and a reference air-fuel ratio provided for an air-fuel ratio feedback control of the fuel mixture; and means for setting a different reference voltage in response to the output of the discriminating means.

8. An air-fuel ratio sensor according to claim 1, wherein the amplifying means is a differential amplifier means (5) having two input terminals (6, 8) one (8) of which is applied with the reference voltage determined by said determining means and the other input terminal (6) being applied to the output voltage of said sensing portion, and said identifying means identifies the air-fuel ratio on the basis of an output signal from said differential amplifier means (5).

9. An air-fuel ratio sensor according to claim 1, wherein said sensing portion is provided with means for reducing the flow velocity of gas in the vicinity of the surface of said sensing portion to make the temperature boundary on the surface thereof thick.

10. An air-fuel ratio sensor according to claim 9, wherein said flow velocity reducing means is ceramic particles with considerable large grain size provided on the surface of said sensing portion.

11. An air-fuel ratio sensor according to claim 9, wherein said flow velocity reducing means is made of fibrous material provided on the surface of said sensing portion.

12. An air-fuel ratio sensor according to claim 9, wherein said flow velocity reducing means is a tube provided so as to surround said sensing portion.

13. A method of sensing an air-fuel ratio of air-fuel mixture supplied to an internal combustion engine including the steps of producing an output voltage by a sensing portion (2-4, 21) in response to the concentration of remaining oxygen included in the exhaust gas, said sensing portion having an output characteristic with a portion that changes stepwise in the vicinity of the stoichiometric air-fuel ratio of a

9

mixture and a portion that changes linearly with respect to an air-fuel ratio of a mixture on either side of the stoichiometric air-fuel ratio, and detecting a temperature of said sensing portion for producing a signal representative of actual air-fuel ratio of the mixture, which is compensated in accordance with the temperature of said sensing portion, characterised by the steps of providing a table of reference voltages versus temperature of said sensing portion, determining a reference voltage ($V_o$) by retrieving the table on the basis of the detected temperature (T) of said sensing portion, an amplifying means (5) obtaining a voltage deviation ($V_1$) between the output voltage (E) of said sensing portion and the reference voltage ($V_o$) determined by the determining step, and identifying (10) the actual air-fuel ratio on the basis of the voltage deviation provided by the obtaining step.

**14.** A method as claimed in claim 13, wherein said sensing portion has a solid electrolyte part (2) and two electrodes (3, 4) provided on respective sides of the solid electrolyte part, one of the electrodes (3) being exposed to the exhaust gas and the other (4) to a reference gas, whereby the output voltage of said sensing portion is obtained in a form of a voltage appearing across the electrodes in response to the concentration of remaining oxygen included in the exhaust gas.

**15.** A method as claimed in claim 14, wherein the detecting step comprises the steps of:-
(a) detecting an internal resistance of the solid electrolyte part and
(b) identifying the temperature of said sensing portion of the basis of the detected internal resistance.

**16.** A method as claimed in claim 13, wherein said sensing portion is composed of an oxide semiconductor part (2), which changes resistivity thereof in response to the concentration of remaining oxygen included in the exhaust gas, and means for converting the change of resistivity into a voltage as the output voltage of said sensing portion.

**17.** A method as claimed in claim 16, wherein the oxide semi-conductor part (2) is heated to maintain the temperature thereof at a predetermined value, and the detecting step comprises detecting a resistance of the heating means (12), and identifying the temperature of said sensing portion on the basis of the detected resistance.

**18.** A method as claimed in claim 13, wherein the determining, obtaining and identifying steps are executed when the temperature detected by the detecting step exceeds a predetermined value.

**19.** A method as claimed in claim 13, wherein the determining step comprises the steps of discriminating which is larger between the stoichiometric air-fuel ratio and a reference air-fuel ratio provided for an air-fuel ratio feedback control of the fuel mixture, and setting a different reference voltage in response to the output of the discriminating step.

**Patentansprüche**

**1.** Ein Luft-Brennstoff-Sensor zur Erkennung eines Luft-Brennstoff-Vehältnisses eines Luft-Brennstoffgemischs, das einer Brennkraftmaschine zugeführt worden ist, gekennzeichnet durch einen Erkennungsteil (2-4, 21), der Abgas von dem Motor ausgesetzt ist, um als Reaktion auf den in dem Abgas enthaltenen, verbleibenden Sauerstoff eine Ausgangsspannung zu erzeugen, wobei der genannte Erkennungsteil einen Ausgang aufweist, der einen Teil aufweist, der sich schrittweise in der Umgebung des stöchiometrischen Luft-Brennstoff-Verhältnisses eines Gemischs ändert und einen Teil, der sich linear in bezug auf ein Luft-Brennstoff-Verhältnis eines Gemischs auf beiden Seiten des stöchiometrischen Luft-Brennstoff-Verhältnisses ändert; und gekennzeichnet durch eine Einrichtung (10) zur Ermittlung einer Temperatur des genannten Erkennungsteils und zur Erzeugung eines Signals, welches sich auf das tatsächliche Luft-Brennstoff-Verhältnis des Gemischs bezieht, welches gemäß der Temperatur des genannten Erkennungsteils kompensiert wird, dadurch gekennzeichnet, daß es sich bei der genannten Einrichtung zur Ermittlung und Erzeugung um einen Mikroprozessor (10) handelt, der ferner eine Tabelle mit Bezugsspannungen in bezug auf die Temperatur des genannten Erkennungsteils aufweist, wobei der genannte Mikroprozessor eine Einrichtung zur Ermittlung einer Bezugsspannung ($V_0$) aufweist, und zwar dadurch, daß die Tabelle auf der Basis der ermittelten Temperatur (T) des genannten Erkennungsteils wiedergewonnen wird; dadurch gekennzeichnet, daß der Sensor ferner eine Verstärkereinrichtung (5) aufweist, um eine Spannungsabweichung ($V_1$) zwischen der Ausgangsspan-

EP 0 311 353 B1

nung (E) des genannten Erkennungsteils und der Bezugsspannung ($V_0$) zur erhalten, die durch die Einrichtung zur Ermittlung einer Bezugsspannung ermittelt worden ist, und gekennzeichnet durch eine Einrichtung (10) zur Identifikation des tatsächlichen Luft-Brennstoff-Verhältnisses auf der Basis der Spannungsabweichung, die durch die Einrichtung zur Erhaltung bereitgestellt ist.

2. Luft-Brennstoff-Verhältnis-Sensor nach Anspruch 1, dadurch gekennzeichnet, daß der genannte Erkennungsteil einen festen Elektrolytteil (2) aufweist sowie zwei Elektroden (3, 4), für die an den entsprechenden Seiten des festen Elektrolytteils gesorgt ist, wobei eine der Elektroden (3) dem Abgas ausgesetzt ist und die andere Elektrode (4) einem Bezugsgas ausgesetzt ist, wodurch die Ausgangsspannung des genannten Erkennungsteil in Form einer Spannung erhalten wird, die über den Elektroden als Folge auf die Konzentrierung des in dem Abgas enthaltenen verbleibenden Sauerstoffs erscheint.

3. Luft-Brennstoff-Verhältnis-Sensor nach Anspruch 2, dadurch gekennzeichnet, daß die Ermittlungseinrichtung eine Einrichtung zur Ermittlung eines Innenwiderstands des festen Elektrolytteils umfaßt; und eine Einrichtung zur Identifikation der Temperatur des genannten Erkennungsteils auf der Basis des ermittelten Innenwiderstands.

4. Luft-Brennstoff-Verhältnis-Sensor nach Anspruch 1, dadurch gekennzeichnet, daß sich der genannte Erkennungsteil aus einem Oxid-Halbleiterteil (2) zusammensetzt, das seinen spezifischen Widerstand als Reaktion auf die Konzentrierung des in dem Abgas enthaltenen verbleibenden Sauerstoff ändert, und eine Einrichtung zur Umwandlung der Veränderung des spezifischen Widerstands in eine Spannung, als Ausgangsspannung des genannten Erkennungsteils.

5. Luft-Brennstoff-Verhältnis-Sensor nach Anspruch 4, ferner gekennzeichnet durch eine Einrichtung (12) zur Erhitzung des Oxid-Halbleiterteils (2), um dessen Temperatur bei einem vorbestimmten Wert aufrecht zu erhalten und dadurch gekennzeichnet, daß die Ermittlungseinrichtung eine Einrichtung zur Ermittlung eines Widerstands der Heizungseinrichtung (12) aufweist; und gekennzeichnet durch eine Einrichtung zur Identifikation der Temperatur des genannten Erkennungsteils auf der Basis des ermittelten Widerstands.

6. Luft-Brennstoff-Verhältnis-Sensor nach Anspruch 1, dadurch gekennzeichnet, daß die Einrichtungen zur Ermittlung, Erhaltung und Identifikation, dann bedient werden, wenn die durch die Ermittlungseinrichtung ermittelte Temperatur einen vorbestimmten Wert überschreitet.

7. Luft-Brennstoff-Verhältnis-Sensor nach Anspruch 1, dadurch gekennzeichnet, daß die Ermittlungseinrichtung eine Einrichtung umfaßt, die zwischen dem stöchiometrischen Luft-Brennstoff-Verhältnis und einem Bezugs-Luft-Brennstoff-Verhältnis, das für eine Luft-Brennstoff-Rückführungssteuerung des Brennstoffgemischs bereitgestellt ist, unterscheidet, welches größer ist; und gekennzeichnet durch eine Einrichtung für das Einstellen einer anderen Bezugsspannung als Reaktion auf die Ausgabe der Unterscheidungseinrichtung.

8. Luft-Brennstoff-Verhältnis-Sensor nach Anspruch 1, dadurch gekennzeichnet, daß die Verstärkereinrichtung eine Differentialverstärkereinrichtung (5) mit zwei Eingangsanschlüssen (6, 8) darstellt, wobei einem der Anschlüsse (8) die durch die Ermittlungseinrichtung ermittelte Bezugsspannung angelegt wird und dem anderen Eingangsanschluß (6) die Ausgangsspannung des genannten Erkennungsteils angelegt wird, und dadurch gekennzeichnet, daß die genannte Identifikationseinrichtung das Luft-Brennstoff-Verhältnis auf der Basis eines Ausgangssignals von der genannten Differentialverstärkereinrichtung (5) identifiziert.

9. Luft-Brennstoff-Verhältnis-Sensor nach Anspruch 1, dadurch gekennzeichnet, daß der genannte Erkennungsteil mit einer Einrichtung zur Verringerung der Gas-Strömungsgeschwindigkeit in der Umgebung der Oberfläche des genannten Erkennungstteils versehen ist, um die Temperaturgrenze auf dessen Oberfläche dick zu gestalten.

10. Luft-Brennstoff-Verhältnis-Sensor nach Anspruch 9, dadurch gekennzeichnet, daß es sich bei der genannten Einrichtung zur Verringerung der Strömungsgeschwindigkeit um Keramikteilchen handelt, wobei die Korngröße auf der Oberfläche des genannten Erkennungsteils verhältnismäßig groß ist.

11

**11.** Luft-Brennstoff-Verhältnis-Sensor nach Anspruch 9, dadurch gekennzeichnet, daß die genannte Einrichtung zur Verringerung der Strömungsgeschwindigkeit aus Faserstoff hergestellt ist, mit dem die Oberfläche ds genannten Erkennungsteils versehen ist.

**12.** Luft-Brennstoff-Verhältnis-Sensor nach Anspruch 9, dadurch gekennzeichnet, daß es sich bei der Einrichtung zur Verringerung der Strömungsgeschwindigkeit um ein Rohr handelt, welches den genannten Erkennungsteil umgibt.

**13.** Verfahren zur Erkennung eines einer Brennkraftmaschine zugeführten Luft-Brennstoff-Verhältnisses eines Luft-Brennstoff-Gemischs, wobei das Verfahren die folgenden Schritte umfaßt: Erzeugung einer Ausgangsspannung durch einen Erkennungsteil (2-4, 21) als Reaktion auf die Konzentrierung des in dem Abgas enthaltenen verbleibenden Sauerstoff, wobei der genannte Erkennungsteil einen Ausgang aufweist, der durch einen Teil gekennzeichnet ist, der sich schrittweise in der Umgebung des stöchiometrischen Luft-Brennstoff-Verhältnisses eines Gemischs ändert und durch einen Teil, der sich linear in bezug auf ein Luft-Brennstoff-Verhältnis eines Gemischs auf beiden Seiten des stöchiometrischen Luft-Brennstoffverhältnisses ändert, Ermittlung einer Temperatur des genannten Erkennungsteils zur Erzeugung eines Signals, das dem tatsächlichen Luft-Brennstoff-Verhältnis entspricht, welches gemäß der Temperatur des genannten Erkennungsteils kompensiert wird, gekennzeichnet durch die Schritte des Bereitstellens einer Tabelle mit Bezugsspannungen gegenüber der Temperatur des genannten Erkennungsteils, der Ermittlung einer Bezugsspannung ($V_0$), durch Wiedergewinnung der Tabelle auf der Basis der ermittelten Temperatur (T) des genannten Ermittlungsteils, gekennzeichnet durch eine Verstärkereinrichtung (5), durch die eine Spannungsabweichung ($V_1$) zwischen der Ausgangsspannung (E) des genannten Erkennungsteils und der durch den Ermittlungsschritt ermittelten Bezugsspannung ($V_0$) erhalten wird, gekennzeichnet durch Identifikation (10) des tatsächlichen Luft-Brennstoff-Verhältnisses auf der Basis der Spannungsabweichung, die durch den Erhaltungsschritt gegeben ist.

**14.** Verfahren nach Anspruch 13, dadurch gekennzeichnet, daß der genannte Erkennungsteil einen festen Elektrolytteil (2) und zwei Elektroden (3, 4) aufweist, die an den entsprechenden Seiten des festen Elektrolytteils bereitgestellt sind, wobei eine der Elektroden (3) dem Abgas ausgesetzt ist und die andere Elektrode (4) einem Bezugsgas ausgesetzt ist, dadurch gekennzeichnet, daß die Ausgangsspannung des genannten Erkennungsteils in Form einer Spannung erhalten wird, die als Reaktion auf die Konzentrierung des in dem Abgas enthaltenen verbleibenden Sauerstoff über den Elektroden erscheint.

**15.** Verfahren nach Anspruch 14, dadurch gekennzeichnet, daß der Schritt zur Ermittlung folgende Schritte umfaßt:
(a) Ermittlung eines Innenwiderstands des festen Elektrolytteils, und
(b) Identifikation der Temperatur des genannten Erkennungsteils auf der Basis des ermittelten Innenwiderstands.

**16.** Verfahren nach Anspruch 13, dadurch gekennzeichnet, daß sich der genannte Erkennungsteil aus einem Oxid-Halbleiterteil (2) zusammensetzt, welches seinen spezifischen Widerstand als Reaktion auf den in dem Abgas enthaltenen verbleibenden Sauerstoff ändert, und gekennzeichnet durch eine Einrichtung zur Umwandlung der Veränderung des spezifischen Widerstands in eine Spannung, als die Ausgangsspannung des genannten Erkennungsteils.

**17.** Verfahren nach Anspruch 16, dadurch gekennzeichnet, daß das Oxid-Halbleiterteil (2) erwärmt wird, um seine Temperatur bei einem vorbestimmten Wert aufrecht zu erhalten und dadurch gekennzeichnet, daß der Ermittlungsschritt die Ermittlung eines Widerstands der Heizungseinrichtung (12) umfaßt und die Identifikation der Temperatur des genannten Erkennungsteils auf der Basis des ermittelten Widerstands.

**18.** Verfahren nach Anspruch 13, dadurch gekennzeichnet, daß die Schritte der Ermittlung, Erhaltung und Identifikation, ausgeführt werden, wenn die durch den Ermittlungsschritt ermittelte Temperatur einen vorbestimmten Wert überschreitet.

**19.** Verfahren nach Anspruch 13, dadurch gekennzeichnet, daß der Ermittlungsschritt den Schritt der Unterscheidung umfaßt, der zwischen dem stöchiometrischen Luft-Brennstoff-Verhältnis und einem

EP 0 311 353 B1

Bezugs-Luft-Brennstoff-Varhältnis, das für eine Luft-Brennstoff-Rückführungssteuerung des Brennstoffgemischs bereitgestellt ist, unterscheidet, welches davon größer ist; und gekennzeichnet durch den Schritt des Einstellens einer anderen Bezugsspannung als Reaktion auf die Ausgabe des Unterscheidungsschrittes.

**Revendications**

1. Détecteur air-combustible pour détecter un rapport air-combustible du mélange air-combustible fourni à un moteur à combustion interne, comprenant un capteur (2-4,21) exposé aux gaz d'échappement du moteur, pour produire une tension de sortie en réponse à la concentration d'oxygène résiduel inclus dans les gaz d'échappement, ledit capteur ayant une caractéristique de sortie comportant une partie qui change de niveau au voisinage du rapport stoechiométrique air-combustible d'un mélange et une partie qui varie linéairement en fonction d'un rapport air-combustible d'un mélange de part et d'autre du rapport stoechiométrique air-combustible; et des moyens (10) de détection d'une température dudit capteur et de production d'un signal représentatif d'un rapport réel air-combustible du mélange, qui est compensé en fonction de la température dudit capteur ; caractérisé en ce que lesdits moyens de détection et de production sont un microprocesseur (10) qui comprend en outre une table de tensions de référence en fonction de la température dudit capteur, ledit microprocesseur comprenant des moyens de détermination d'une tension de référence ($V_0$) par recherche dans la table sur la base de la température détectée (T) dudit capteur ; le détecteur comprenant en outre des moyens d'amplification (5) pour l'obtention d'un écart de tension ($V_1$) entre la tension de sortie (E) dudit capteur et la tension de référence ($V_0$) déterminée par les moyens de détermination d'une tension de référence, et des moyens (10) d'identification du rapport effectif air-combustible sur la base de l'écart de tension fourni par les moyens d'obtention.

2. Détecteur de rapport air-combustible suivant la revendication 1, dans lequel ledit capteur comprend un élément d'électrolyte solide (2) et deux électrodes (3,4) prévues sur des côtés respectifs de l'élément d'électrolyte solide, une des électrodes (3) étant exposée aux gaz d'échappement et l'autre (4) étant exposée à un gaz de référence, de sorte que la tension de sortie dudit capteur est obtenue sous la forme d'une tension apparaissant entre les électrodes en réponse à la concentration d'oxygène résiduel inclus dans les gaz d'échappement.

3. Détecteur de rapport air-combustible suivant la revendication 2, dans lequel les moyens de détection comprennent des moyens de détection d'une résistance interne de l'élément d'électrolyte solide ; et des moyens d'identification de la température dudit capteur sur la base de la résistance interne détectée.

4. Détecteur de rapport air-combustible suivant la revendication 1, dans lequel ledit capteur est composé d'un élément d'oxyde semi-conducteur (2), dont la résistivité varie en réponse à la concentration d'oxygène résiduel inclus dans les gaz d'échappement, et il est prévu des moyens de conversion de la variation de résistivité en une tension, constituant la tension de sortie dudit capteur.

5. Détecteur de rapport air-combustible suivant la revendication 4, comprenant en outre des moyens (12) de chauffage de l'élément d'oxyde semi-conducteur (2) pour maintenir sa température à une valeur prédéterminée, et les moyens de détection comprennent des moyens de détection d'une résistance des moyens de chauffage (12), et des moyens d'identification de la température dudit capteur sur la base de la résistance détectée.

6. Détecteur de rapport air-combustible suivant la revendication 1, dans lequel les moyens de détermination, d'obtention et d'identification sont activés lorsque la température détectée par les moyens de détection dépasse une valeur prédéterminée.

7. Détecteur de rapport air-combustible suivant la revendication 1, dans lequel les moyens de détermination comprennent des moyens de discrimination du rapport le plus grand, entre le rapport air-combustible stoechiométrique et un rapport air-combustible de référence fourni pour une commande en retour du rapport air-combustible du mélange air-combustible ; et des moyens d'établissement d'une tension de référence différente en réponse à la sortie des moyens de discrimination.

13

**8.** Détecteur de rapport air-combustible suivant la revendication 1, dans lequel les moyens d'amplification comprennent un amplificateur différentiel (5) ayant deux bornes d'entrée (6,8) dont l'une (8) reçoit la tension de référence déterminée par lesdits moyens de détermination et dont l'autre borne d'entrée (6) est reliée à la tension de sortie dudit capteur, et lesdits moyens d'identification identifient le rapport air-combustible sur la base d'un signal de sortie dudit amplificateur différentiel (5).

**9.** Détecteur de rapport air-combustible suivant la revendication 1, dans lequel ledit capteur comporte des moyens de réduction de la vitesse d'écoulement des gaz au voisinage de la surface dudit capteur afin d'obtenir une limite épaisse de température sur sa surface.

**10.** Détecteur de rapport air-combustible suivant la revendication 9, dans lequel lesdits moyens de réduction de la vitesse d'écoulement sont des particules céramiques de très grosse granulométrie, prévues sur la surface dudit capteur.

**11.** Détecteur de rapport air-combustible suivant la revendication 9, dans lequel lesdits moyens de réduction de la vitesse d'écoulement sont constitués d'une matière fibreuse prévue sur la surface dudit capteur.

**12.** Détecteur de rapport air-combustible suivant la revendication 9, dans lequel lesdits moyens de réduction de la vitesse d'écoulement comprennent un tube disposé de manière à entourer ledit capteur.

**13.** Méthode de détection d'un rapport air-combustible du mélange air-combustible fourni à un moteur à combustion interne, comprenant les étapes de production d'une tension de sortie par un capteur (2-4,21) en réponse à la concentration d'oxygène résiduel inclus dans les gaz d'échappement, ledit capteur ayant une caractéristique de sortie avec une partie qui change de niveau au voisinage du rapport air-combustible stoechiométrique d'un mélange et une partie qui varie linéairement en fonction d'un rapport air-combustible d'un mélange de part et d'autre du rapport air-combustible stoechiométrique, et de détection d'une température dudit capteur pour la production d'un signal représentatif du rapport réel air-combustible du mélange, qui est compensé en fonction de la température dudit capteur, caractérisée par les étapes de création d'une table de tensions de référence en fonction de la température dudit capteur, détermination d'une tension de référence ($V_0$) par recherche dans la table sur la base de la température détectée (T) dudit capteur, des moyens d'amplification (5) fournissant un écart de tension ($V_1$) entre la tension de sortie (E) dudit capteur et la tension de référence ($V_0$) déterminée par l'étape de détermination, et identification (10) du rapport effectif air-combustible sur la base de l'écart de tension fourni par l'étape d'obtention.

**14.** Méthode suivant la revendication 13, dans laquelle ledit capteur comprend un élément d'électrolyte solide (2) et deux électrodes (3,4) prévues sur des côtés respectifs de l'élément d'électrolyte solide, une des électrodes (3) étant exposée aux gaz d'échappement et l'autre électrode (4) étant exposée à un gaz de référence, de sorte que la tension de sortie dudit capteur est obtenue sous la forme d'une tension apparaissant entre les électrodes en réponse à la concentration d'oxygène résiduel inclus dans les gaz d'échappement.

**15.** Méthode suivant la revendication 14, dans laquelle l'étape de détection comprend les étapes de :
(a) détection d'une résistance interne de l'élément d'électrolyte solide ; et
(b) identification de la température dudit capteur sur la base de la résistance interne détectée.

**16.** Méthode suivant la revendication 13, dans laquelle ledit capteur est composé d'un élément d'oxyde semi-conducteur (2),dont la résistivité varie en réponse à la concentration d'oxygène résiduel inclus dans les gaz d'échappement, et de moyens de conversion de la variation de résistivité en une tension constituant la tension de sortie dudit capteur.

**17.** Méthode suivant la revendication 16, dans laquelle l'élément d'oxyde semi-conducteur (2) est chauffé de manière à maintenir sa température à une valeur prédéterminée, et l'étape de détection comprend la détection d'une résistance des moyens de chauffage (12) et l'identification de la température dudit capteur sur la base de la résistance détectée.

14

**18.** Méthode suivant la revendication 13, dans laquelle les étapes de détermination, d'obtention et d'identification sont exécutées lorsque la température détectée par l'étape de détection dépasse une valeur prédéterminée.

**19.** Méthode suivant la revendication 13, dans laquelle l'étape de détermination comprend les étapes de discrimination du rapport qui est le plus grand, entre le rapport air-combustible stoechiométrique et un rapport air-combustible de référence prévu pour une commande en retour du rapport air-combustible du mélange air-combustible, et d'établissement d'une tension de référence différente en réponse à la sortie de l'étape de discrimination.

15

# FIG. 1

EXHAUST GAS

FIG. 2

FIG. 3

# FIG. 4

```
                                           ┌─────────────────┐
                  START                     108
                    │                        ◇ T>600°C ◇──YES──┐
                    ▼                        │                  │
           ┌────────────────┐  101           NO                ▼
           │  TURN OFF 16   │                │         ┌─────────────────┐  109
           └────────────────┘                │         │  TURN OFF 13    │
                    │                         ▼         └─────────────────┘
           ┌────────────────┐  102    ┌────────────────┐        │
           │  READ VOLT.    │         │  TURN ON 13    │  110    │
           │  OF TERM. 6 (E)│         └────────────────┘◄───────┘
           └────────────────┘                 │
                    │                          ▼
           ┌────────────────┐  103    ┌────────────────┐  111
           │    STORE E     │         │  TURN OFF 16   │
           └────────────────┘         └────────────────┘
                    │                          │
           ┌────────────────┐  104             ▼
           │   TURN ON 16   │         112 ◇ A/F_R = A/F_S ◇──YES──┐
           └────────────────┘                 │                    ▼
                    │                          NO         ┌─────────────────┐  113
           ┌────────────────┐  105             │          │  READ VOLT.     │
           │  READ VOLT.    │                  │          │  OF TERM. 6 (E) │
           │  OF TERM. 6 (U)│                  │          └─────────────────┘
           └────────────────┘                  │                   │
                    │                           │                  END
           ┌────────────────┐  106             │
           │  r = (E/U − 1)R │                 ▼
           └────────────────┘          114 ◇ A/F_R > A/F_S ◇──YES──┐
                    │                          │                     ▼
           ┌────────────────┐  107            NO          ┌─────────────────┐  115
           │   RETRIEVE     │                  │          │   V_0 ← P_1(T)  │
           │   TABLE T(r)   │                  ▼          └─────────────────┘
           └────────────────┘         ┌────────────────┐          │
                    │                  │  V_0 ← P_2(T)  │  116     │
                    └─────────────────►└────────────────┘◄─────────┘
                                               │
                                               ▼
                                      ┌────────────────┐  117
                                      │   OUTPUT V_0   │
                                      │   TO TERM. 8   │
                                      └────────────────┘
                                               │
                                      ┌────────────────┐  118
                                      │  READ VOLT.    │
                                      │  OF TERM. 7 (V_1)│
                                      └────────────────┘
                                               │
                                      ┌────────────────┐  119
                                      │   RETRIEVE     │
                                      │  TABLE A/F (V_1)│
                                      └────────────────┘
                                               │
                                              END
```

$$r = \left(\frac{E}{U} - 1\right)R$$

$V_0 \leftarrow P_1(T)$

$V_0 \leftarrow P_2(T)$

*FIG. 5*

*FIG. 6*

# FIG. 7a  FIG. 7b  FIG. 7c

Nb₂O₅

TiO₂

CeO₂

# FIG. 8